# EUROPÄISCHE PATENTSCHRIFT

(11) **EP 2 183 493 B1**
(45) Veröffentlichungstag und Bekanntmachung des Hinweises auf die Patenterteilung: **17.06.2015**
(21) Anmeldenummer: 08787426.9
(22) Anmeldetag: 22.08.2008
(51) Int. Cl.: F16C 33/38, F16C 29/04, E05D 15/06, F16C 29/12

(54) **LINEARFÜHRUNGSSYSTEM**
LINEAR GUIDANCE SYSTEM
SYSTEME DE GUIDAGE LINEAIRE

(30) Priorität: 25.08.2007 DE 102007040230
(43) Veröffentlichungstag der Anmeldung: 12.05.2010
(73) Patentinhaber: Accuride International GmbH, 65582 Diez/Lahn (DE)
(72) Erfinder: TRAISER, Reinhold, 65520 Bad Camberg (DE)
(74) Vertreter: WSL Patentanwälte Partnerschaft mbB
(86) Internationale Anmeldenummer: PCT/EP2008/061027
(87) Internationale Veröffentlichungsnummer: WO 2009/027342

(56) Entgegenhaltungen:
- EP-A- 0 470 477
- EP-A- 0 533 399
- GB-A- 738 486
- US-A- 4 629 260
- US-A- 4 655 613
- US-A- 5 553 946

## Beschreibung

Die vorliegende Erfindung betrifft ein Linearführungssystem mit einer Führungsschiene und einem daran über wenigstens zwei Kugellager verfahrbar geführten Schlitten, wobei die Kugellager jeweils mehrere Kugeln und einen streifenförmigen Kugelkäfig umfassen und die Führungsschiene Laufflächen und der Schlitten Laufflächen für das Abwälzen der Kugeln der Kugellager aufweisen.

Linearführungssysteme lassen sich in den verschiedensten Bereichen einsetzen. Im Automobilbau werden Linearführungssysteme mit hoher Belastbarkeit u.a. für Fahrzeugschiebetüren, Ladeböden, längsverstellbare Konsolen im Fahrzeuginnenraum und andere Einrichtungen verwendet.

Im Bereich der Fahrzeugschiebetüren werden aus Stabilitätsgründen häufig Führungsschienen an der Außenseite der Karosserie montiert, an denen die Schiebetüren geführt werden. Eine solche Montage an der Außenseite der Karosserie gewährleistet zwar eine hohe Stabilität des Führungssystems unter der Belastung des Gewichts der Schiebetür, jedoch sind die auf der Außenseite der Karosserie montierten Führungsschienen bei geschlossener Schiebetür sichtbar und stören die Optik erheblich. Darüber hinaus sind diese Führungsschienen aufgrund ihrer Montage auf der Außenseite des Fahrzeugs ständig den äußeren Witterungsbedingungen ausgesetzt und korrodieren daher schneller als innen montierte Führungssysteme oder erfordern einen erheblich höheren Korrosionsschutz. Zudem sind solche Führungsschienen profiliert, so daß sich Schmutz aus der Umgebung an und in den Schienen schnell ansammelt und die Laufeigenschaften des Führungssystems dadurch sehr schnell verschlechtert werden.

Eine Schiebetür für Kraftfahrzeuge mit einer auf der Innenseite der Tür montierten Führungsschiene, bei der einige der vorgenannten Nachteile von auf der Außenseite der Karosserie montierten Führungsschienen überwunden werden, offenbart die DE 4314115 A1. Das beschriebene Führungssystem für eine Kraftfahrzeugschiebetür besitzt jedoch keine besonders guten Laufeigenschaften und damit keine gute Haptik und ist verhältnismäßig laut.

Die US-A-4 655 613 beschreibt eine kugelgelagerte Linearführung mit einem streifenförmigen Kugelkäfig mit mehreren in Reihe hintereinander angeordneten, im wesentlichen kreisförmigen Durchgangsöffnungen, in welche die Kugeln eingesetzt sind, wobei sich die Randbereiche der Durchgangsöffnungen an die kugelförmige Außenfläche der Kugeln angepasst sind und sich in Richtung beider Laufflächen der gegeneinander verfahrbaren Schienenelemente verjüngen, so dass die Kugeln in den Durchgangsöffnungen gegen ein Herausfallen aus den Durchgangsöffnungen gesichert sind.

Die Aufgabe der vorliegenden Erfindung bestand darin, ein Linearführungssystem bereitzustellen, das hohe Lasten tragen kann, eine geringe Geräuschentwicklung aufweist, eine kompakte Bauweise besitzt, große Verfahrwege zuläßt und verhältnismäßig preiswert herzustellen ist. Eine weitere Aufgabe der Erfindung bestand darin, ein Linearführungssystem für Fahrzeugschiebetüren, Ladeböden, längsverstellbare Konsolen im Fahrzeuginnenraum etc. mit den vorgenannten Eigenschaften zu schaffen.

Gelöst wird diese Aufgabe erfindungsgemäß durch ein Linearführungssystem der eingangs genannten Art mit den Merkmalen des Anspruchs 1.

Bei dem streifenförmigen Kugelkäfig des erfindungsgemäßen Linearführungssystems sitzen die Kugeln in den Durchgangsöffnungen und sind gegen ein Herausfallen nach oben, d. h. in der Richtung von einer Lauffläche der Führungsschiene hin zu der zugehörigen Lauffläche des Schlittens, gesichert, indem entweder der Innendurchmesser der Durchgangsöffnungen konisch auf einen Innendurchmesser verjüngt ist, der kleiner ist als der Durchmesser der Kugeln, oder indem er durch Begrenzungsmittel auf einen Innendurchmesser eingeengt ist, der kleiner ist als der Durchmesser der Kugeln.

In einer bevorzugten Ausführungsform sind an den Durchgangsöffnungen des Kugelkäfigs elastisch verformbare Haltemittel vorgesehen, welche so ausgebildet sind, daß sie die Kugeln gegen ein Herausfallen aus den Durchgangsöffnungen in Richtung der unter dem Kugelkäfig angeordneten Lauffläche der Führungsschiene sichern, wenn die Kugeln nicht an der Lauffläche anliegen. Da die Kugeln von dem Kugelkäfig und den oberen Haltemitteln mit einer Vorspannung gegen die Laufflächen der Führungsschiene gehalten werden, kommt diese Sicherung nur zum Tragen, wenn die Kugeln nicht an der Lauffläche anliegen, z. B. bei der Montage und Lagerung des Kugelkäfigs.

Bevorzugt sind die elastisch verformbaren Haltemittel in Richtung der unter dem Kugelkäfig angeordneten Lauffläche als elastisch zur Mitte der Durchgangsöffnungen hin vorgespannte Stege ausgebildet. Da diese Haltemittel nur benötigt werden, wenn die Kugeln nicht an der Lauffläche anliegen, genügt es, wenn ein oder zwei solcher Stege an jeder Durchgangsöffnung vorgesehen ist, um die Kugel in der Durchgangsöffnung gegen ein Herausfallen zu sichern. Selbstverständlich können auch mehrere solcher Stege vorgesehen sein. Bei der Montage des Kugelkäfigs, nämlich beim Einsetzen der Kugeln in die Durchgangsöffnungen des Kugelkäfigs, werden die Kugeln von unten in den Kugelkäfig eingesetzt, wobei die Haltemittel bzw. Stege kurzzeitig auseinandergedrückt werden, damit eine Kugel eingesetzt werden kann.

Der erfindungsgemäße streifenförmige Kugelkäfig ist einfach und preiswert herzustellen und an der Führungsschiene zu montieren und bietet gute Laufeigenschaften für das Linearführungssystem. Die Länge des Kugelkäfigs und die Anzahl der darin angeordneten Kugeln und Durchgangsöffnungen hängt wesentlich von der Gesamtlänge des Führungssystems und des Verfahrwegs ab, jedoch auch von der geforderten Belastbarkeit des Linearführungssystems, der gewünschten Haptik und Laufruhe.

Ein weiteres wesentliches Merkmal des erfindungsgemäßen Linearführungssystem ist, daß die Kugeln von dem Kugelkäfig mit einer Vorspannung gegen die Laufflächen der Führungsschiene gehalten werden. Dies gewährleistet, daß die Kugeln stets an den Laufflächen der Führungsschiene anliegen, wodurch ein Klappern und störende Geräuschentwicklung des Kugellagers, z.B. bei Vibrationen, vermieden werden, und zwar auch bei den Kugeln, die gerade nicht unter Belastung zwischen der Laufschiene und dem Schlitten stehen. Um die Vorspannung zu gewährleisten, ist der Kugelkäfig elastisch verformbar bzw. flexibel ausgebildet.

In einer bevorzugten Ausführungsform des erfindungsgemäßen Linearführungssystems greifen die Seitenkanten in der Längserstreckung des streifenförmigen Kugelkäfigs in zwei sich in der Längserstreckung der Führungsschiene einander gegenüberliegenden Nuten für die Befestigung des Kugelkäfigs an der Führungsschiene ein. Für diesen Zweck sind neben den Laufflächen der Führungsschiene zwei mit ihren Öffnungen einander zugewandte Nuten vorgesehen. In diese Nuten werden die Seitenkanten des streifenförmigen Kugelkäfigs eingeführt. Dabei ist die Anordnung der Nuten so gewählt, daß der Kugelkäfig bei der Befestigung quer zu seiner Längsachse leicht verbogen wird und aufgrund seiner Flexibilität bzw. Elastizität die Kugeln stets mit einer Vorspannung gegen die Lauffläche der Führungsschiene drückt. Zweckmäßigerweise ist der streifenförmige Kugelkäfig daher aus einem flexiblen, elastischen Material, vorzugsweise Kunststoff, hergestellt. Er kann jedoch auch aus Metall, beispielsweise Stahl oder Edelstahl hergestellt sein.

In einer ganz besonders bevorzugten Ausführungsform des erfindungsgemäßen Linearführungssystems weist die Führungsschiene auf zwei einander gegenüberliegenden Seiten jeweils eine Lauffläche und ein Kugellager auf. Alternativ können an der Führungsschiene jedoch auch mehr als zwei Laufflächen und zwei Kugellager vorgesehen sein, beispielsweise zwei Laufflächen und zwei Kugellager auf jeder Seite der Führungsschiene. Für die meisten Anwendungen ist es jedoch ausreichend, wenn auf jeder der gegenüberliegenden Seiten der Führungsschiene jeweils genau eine Lauffläche und ein Kugellager vorgesehen sind.

Die Gesamtlänge des Linearführungssystems wird im wesentlichen durch die Länge der Führungsschiene vorgegeben. Der auf der Führungsschiene verfahrbar geführte Schlitten ist erheblich kürzer als die Führungsschiene. Der maximale Verfahrweg wird durch die Gesamtlänge der Führungsschiene und das Verhältnis der Länge des Schlittens zu der Länge der Führungsschiene bestimmt. Bei gegebener Länge der Führungsschiene ist der maximal mögliche Verfahrweg für einen an dem Schlitten befestigten Gegenstand umso länger je kürzer der Schlitten ist. Die Auswahl der Länge des an der Führungsschiene verfahrbar geführten Schlittens bestimmt sich jedoch nicht nur nach dem gewünschten Verfahrweg, sondern auch nach der erforderlichen Belastbarkeit und Stabilität des Linearführungssystems. Je länger der Schlitten ist, desto höher sind Belastbarkeit, Laufstabilität und Laufruhe, da bei gleich ausgestaltetem Kugellager ein längerer Schlitten gleichzeitig an mehr Kugeln abgerollt wird als ein kürzerer Schlitten.

Zweckmäßigerweise umfaßt der Schlitten ein im Querschnitt im wesentlichen C-förmiges Profil, dessen jeweilige Endabschnitte Laufflächen aufweisen und die Führungsschiene im Bereich der Kugellager umgreifen. In einer besonders bevorzugten Ausführungsform des erfindungsgemäßen Linearführungssystems weist der Schlitten weiterhin eine Platte auf, die sich zwischen den Endabschnitten des im wesentlichen C-förmigen Profils des Schlittens erstreckt und mit den Endabschnitten unlösbar oder lösbar, vorzugsweise unlösbar, besonders bevorzugt mittels einer Schweißverbindung, verbunden ist. Das C-förmige Profil und die an dessen Endabschnitten befestigte Platte umschließen die Führungsschiene somit vollständig wie ein rohrförmig geschlossenes Profil. Durch das Schließen des C-förmigen Profils des Schlittens zu einem rohrförmigen Profil mittels der mit den Endabschnitten des C-förmigen Profils verbundenen Platte wird ein sehr hoher Lastwert und eine außerordentlich gute Verwindungsstabilität des Linearführungssystems erzielt. Die Verwendung einer Platte für die Verbindung der jeweiligen Endabschnitte des C-förmigen Profils des Schlittens hat den weiteren Vorteil, daß bei der Herstellung des Linearführungssystems auftretende Toleranzen der Einzelteile beim Verbinden der Platte mit den Endabschnitten des C-förmigen Profils ausgeglichen werden können. Beim Verbinden der Platte mit den Endabschnitten des C-förmigen Profils kann das C-förmige Profil zum Ausgleich von Toleranzen mehr oder weniger stark zusammengedrückt werden und verbleibt nach dem Verbinden der Platte mit den Endabschnitten in dieser Lage. Hierdurch können sowohl Toleranzen bei der Herstellung des C-förmigen Profils des Schlittens als auch Toleranzen bei der Herstellung der Führungsschiene ausgeglichen werden.

Im erfindungsgemäßen Linearführungssystem weist der streifenförmige Kugelkäfig in seiner Längserstreckung wenigstens abschnittsweise, vorzugsweise über seine gesamte Länge, wenigstens eine Torsionsnut (nutenförmige Ausnehmung) auf. Die wenigstens eine Torsionsnut ist auf der den Laufflächen der Führungsschiene zugewandten Seite des Kugelkäfigs angeordnet. Diese wenigstens eine Torsionsnut beeinflußt bzw. verändert die elastische Biegsamkeit des streifenförmigen Kugelkäfigs quer zu seiner Längsachse. Durch die Breite und Tiefe der wenigstens einen Torsionsnut kann die Vorspannkraft der Kugeln gegen die Laufflächen der Führungsschiene variiert bzw. eingestellt werden. Ein weiterer Vorteil der wenigstens einen Torsionsnut besteht darin, daß sie als Vorratsraum für einen bei Kugellagern üblicherweise verwendeten Schmierstoff dienen kann.

In einer weiteren bevorzugten Ausführungsform des erfindungsgemäßen Linearführungssystems weist der streifenförmige Kugelkäfig auf der den Laufflächen der Führungsschiene abgewandten Seite mehrere in der Nähe der Seitenkanten in der Längsrichtung des Kugelkäfigs und in Reihe hintereinander angeordnete noppenförmige Erhebungen auf. Diese noppenförmigen Erhebungen haben mehrere Vorteile. Durch das Abrollen der Kugeln auf der Lauffläche der Führungsschiene beim Verfahren des Schlittens wird der gesamte Kugelkäfig in Längsrichtung der Führungsschiene ebenfalls mitverfahren bzw. -verschoben. Die noppenförmigen Erhebungen in der Nähe der Seitenkanten des streifenförmigen Kugelkäfigs verringern die Anlagefläche der Bereiche der Seitenkanten innerhalb der an der Führungsschiene zum Halten des Kugelkäfigs vorgesehenen Nuten und damit den Reibungswiderstand. Darüber hinaus sorgen die noppenförmigen Erhebungen für eine gute Verteilung von Schmierstoff, der zweckmäßigerweise in den Nuten an der Führungsschiene zum leichteren Verschieben des Kugelkäfigs vorgesehen ist.

In einer weiteren bevorzugten Ausführungsform weit der streifenförmige Kugelkäfig an seinen beiden Endabschnitten Endanschläge auf, die so ausgebildet sind, daß der Schlitten nicht über ein Ende des Kugelkäfigs hinweg verfahren werden kann, sondern bei Erreichen eines Endes des Kugelkäfigs auf den Endanschlag trifft. Tritt dies ein und ist beim Verfahren des Schlittens noch nicht das Ende der Führungsschiene erreicht, so nimmt bzw. zieht der Schlitten den Kugelkäfig mit bis zum Ende des Verfahrweges. Durch die Endanschläge an den jeweiligen Enden des Kugelkäfigs wird gewährleistet, daß der Schlitten stets mit seiner vollen Länge über dem Kugelkäfig verbleibt und nicht über diesen hinaus verfahren wird. Dies verbessert Stabilität, Laufeigenschaften und Belastbarkeit des erfindungsgemäßen Führungssystems.

Weitere Vorteile, Merkmale und Ausgestaltungsformen des erfindungsgemäßen Linearführungssystems werden deutlich anhand der nachfolgenden Beschreibung einer bevorzugten Ausführungsform und der dazugehörigen Figuren.
- Figur 1: zeigt ein erfindungsgemäßes Linearführungssystem in perspektivischer Ansicht schräg von oben.
- Figur 2: zeigt ein erfindungsgemäßes Linearführungssystem im Querschnitt zu seiner Längserstreckung.
- Figur 3: zeigt einen streifenförmigen Kugelkäfig des erfindungsgemäßen Linearführungssystems von unten, von der Seite und von oben.
- Figur 4: zeigt einen Querschnitt durch den streifenförmigen Kugelkäfig gemäß Figur 3 entlang der Schnittlinie C-C.
- Figur 5: zeigt einen Querschnitt durch den streifenförmigen Kugelkäfig gemäß Figur 3 entlang der Schnittlinie D-D.
- Figur 6: zeigt einen Schnitt durch den streifenförmigen Kugelkäfig gemäß Figur 3 entlang der Schnittlinie F-F.

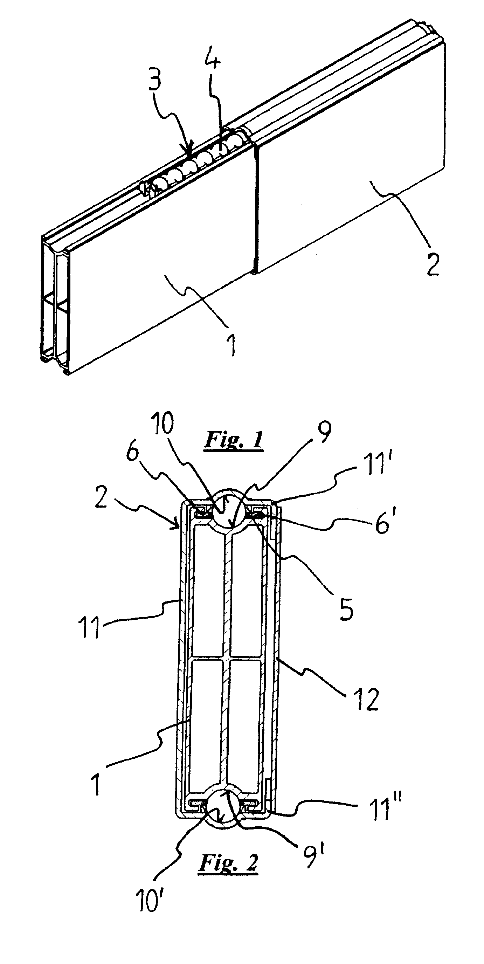

Figur 1 ist eine perspektivische Ansicht schräg von oben auf eine besonders bevorzugte Ausführungsform des erfindungsgemäßen Linearführungssystems mit einer Führungsschiene 1, einem Schlitten 2 und zwei Kugellagern 3 und 3'. Wie in Figur 2 gezeigt ist, ist die Führungsschiene 1 bei dieser erfindungsgemäß besonders bevorzugten Ausführungsform als ein durch Extrusion hergestelltes Profil, vorzugsweise aus Aluminium, hergestellt. Die Führungsschiene 1 hat ein im wesentlichen kastenförmiges Profil, welches im Inneren Hohlräume und Stabilisierungsverstrebungen aufweist. Auf zwei gegenüberliegenden Seiten der Führungsschiene sind Laufflächen 9 und 9' angeordnet. Seitlich der Laufflächen erstreckt sich das Profil weiter unter Ausbildung von einander zugewandten Nuten 6 und 6 ', in welche die Seitenkanten des Kugelkäfigs 5 eingreifen. Der Kugelkäfig 5 ist mit Kugeln 4 bestückt, die nach oben gegen ein Herausfallen dadurch gesichert sind, daß sich der Innendurchmesser der Durchgangsöffnungen konisch verjüngt. Der Kugelkäfig 5 hält die Kugeln 4 mit einer Vorspannung gegen die Laufflächen 9 bzw. 9' der Führungsschiene 1 gedrückt.

Des weiteren ist in Figur 2 deutlich zu erkennen, daß der Schlitten 2 aus einem im wesentlichen C-förmigen Profil 11 und einer mit den Endabschnitten 11' und 11" des C-förmigen Profils 11 verbundenen Platte 12 besteht. Die Platte 12 ist mit den Endabschnitten 11' und 11" des C-förmigen Profils 11 verschweißt. In Figur 1 ist zu erkennen, daß es sich bei der Platte 12 um eine Lochplatte handelt. Die Lochplatte 12 kann zur Befestigung eines zu verfahrenen Gegenstandes verwendet werden, wenn die Führungsschiene stationär montiert wird. Alternativ kann der Schlitten 2 über die Lochplatte 12 stationär und die Führungsschiene 1 an einem zu verfahrenden Gegenstand, wie beispielsweise einer Fahrzeugschiebetür, befestigt werden. Die Befestigung der Führungsschiene erfolgt üblicherweise über Anschlußstücke, die an den jeweiligen Enden der Führungsschiene befestigt werden (nicht dargestellt).

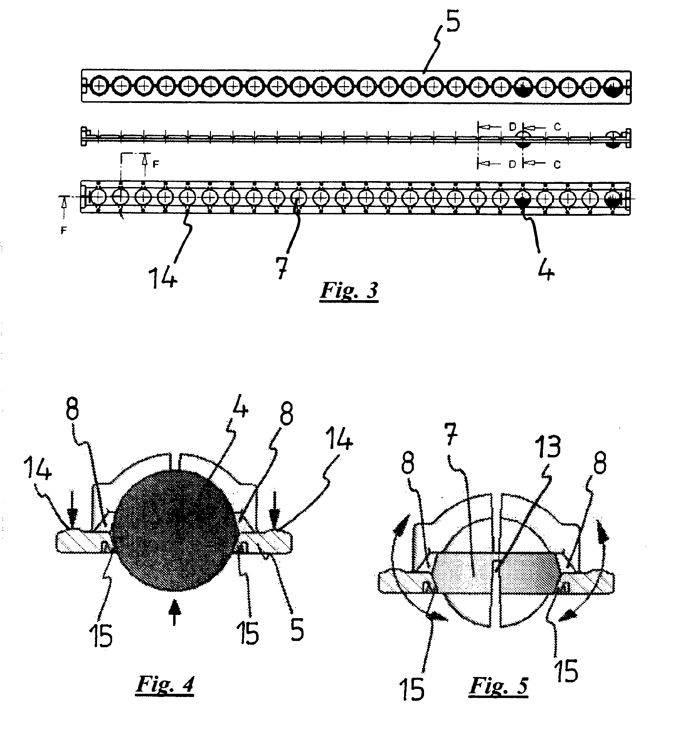

Figur 3 zeigt den streifenförmigen Kugelkäfig 5 mit in dieser Darstellung nur zwei in den Durchgangsöffnungen 7 angeordneten Kugeln 4. Es versteht sich von selbst, daß in einem vollständig montierten Linearführungssystem in jeder oder wenigstens den meisten der Durchgangsöffnungen 7 eine Kugel 4 vorgesehen ist.

Figur 4 zeigt eine vergrößerte Querschnittsdarstellung des Kugelkäfigs 5 gemäß Figur 3 entlang der Schnittlinie C-C. Hierin sind deutlich die konische Verjüngung des Innendurchmessers der Durchgangsöffnung 7 und die als elastische Stege ausgebildeten Haltemittel 15 zu erkennen. Die konisch verjüngte Wandfläche 8 der Durchgangsöffnung liegt oberhalb der Mittelebene der Kugel an dieser an und die Haltemittel 15 liegen unterhalb der Mittelebene der Kugel an dieser an und sichern die Kugel somit gegen ein Herausfallen aus der Durchgangsöffnung 7.

In Figur 4 ist auch deutlich zu erkennen, daß auf dem Kugelkäfig 5 in der Nähe der Seitenkanten noppenförmigen Erhebungen 14 angeordnet sind. Figur 3, untere Darstellung, zeigt, daß die noppenförmigen Erhebungen 14 in Reihen hintereinander und in gleichmäßigen Abständen auf der Oberseite des Kugelkäfigs 5 angeordnet sind. Die noppenförmigen Erhebungen 14 verringern die Anlagefläche des Kugelkäfigs in den Nuten 6 und 6' an der Führungsschiene 1 und damit den Reibungswiderstand.

Figur 5 zeigt einen Querschnitt durch den Kugelkäfig 5 gemäß Figur 3 entlang der Schnittlinie D-D. Figur 5 zeigt im wesentlichen die gleiche Schnittansicht wie Figur 4, jedoch ohne eine in die geschnittene Durchgangsöffnung 7 eingesetzte Kugel.

Wie in Figur 5 gezeigt ist, weist der Kugelkäfig 5 auf der Unterseite eine Torsionsnut 13 (nutenförmige Ausnehmung) auf, die sich im Wesentlichen über die gesamte Länge des Kugelkäfigs erstreckt und durch welche die Biegsamkeit und Elastizität des Kugelkäfigs quer zu seiner Längserstreckung beeinflußt wird. Durch die Auswahl der Breite und Tiefe der Torsionsnut 13 kann somit die Vorspannung (Vorspannkraft) der Kugeln gegen die Laufflächen 9 und 9' der Führungsschiene 1 variiert bzw. eingestellt werden. In der vorliegenden Beschreibung wird von einer Torsionsnut gesprochen, obwohl diese durch die Durchgangsöffnungen des Kugelkäfigs verläuft und in den Durchgangsöffnungen eigentlich keine Nut mehr darstellt. Man könnte gleichermaßen auch von vielen einzelnen (kleinen) Torsionsnuten sprechen, die sich in den Bereichen zwischen benachbarten Durchgangsöffnungen in der Längsrichtung des Kugelkäfigs erstrecken.

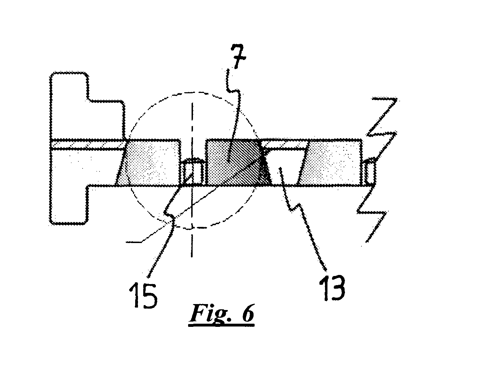

Figur 6 zeigt einen Schnitt durch den streifenförmigen Kugelkäfig gemäß Figur 3 entlang der Schnittlinie F-F. Deutlich zu erkennen sind in den Figuren 3 bis 6 auch die den Endabschnitten des streifenförmigen Kugelkäfigs nach oben stehenden Endanschläge, die so ausgebildet sind, daß der Schlitten nicht über ein Ende des Kugelkäfigs hinweg verfahren werden kann.

### Bezugszeichen

- 1: Führungsschiene
- 2: Schlitten
- 3, 3': Kugellager
- 4: Kugeln
- 5: Kugelkäfig
- 6, 6': Nuten
- 7: Durchgangsöffnungen
- 8: verjüngte Wände der Durchgangsöffnungen
- 9, 9': Laufflächen der Führungsschiene 1
- 10, 10': Laufflächen des C-förmigen Profils 11
- 11: C-förmiges Profil
- 11', 11": Endabschnitte des C-förmigen Profils 11
- 12: Platte
- 13: Torsionsnut
- 14: noppenförmige Erhebungen
- 15: Haltemittel

## Patentansprüche

1. Linearführungssystem mit einer Führungsschiene (1) und einem daran über wenigstens zwei Kugellager (3, 3') verfahrbar geführten Schlitten (2), wobei die Kugellager jeweils mehrere Kugeln (4) und einen streifenförmigen Kugelkäfig (5) umfassen und die Führungsschiene (1) Laufflächen (9, 9') und der Schlitten (2) Laufflächen (10, 10') für das Abwälzen der Kugeln (4) der Kugellager (3, 3') aufweisen, wobei
der Kugelkäfig (5) mehrere in Reihe hintereinander angeordnete, im wesentlichen kreisförmige Durchgangsöffnungen (7) aufweist, in welche die Kugeln (4) eingesetzt sind, wobei der Innendurchmesser der Durchgangsöffnungen in der Richtung von einer Lauffläche (9, 9') der Führungsschiene hin zu der zugehörigen Lauffläche (10, 10') des Schlittens (2) konisch auf einen Innendurchmesser verjüngt oder durch Begrenzungsmittel auf einen Innendurchmesser eingeengt ist, der kleiner ist als der Durchmesser der Kugeln, so daß die Kugeln in den Durchgangsöffnungen (7) gegen ein Herausfallen aus den Durchgangsöffnungen (7) in der Richtung der Lauffläche (10, 10') des Schlittens gesichert sind,
der Kugelkäfig (5) elastisch verformbar ausgebildet und an der Führungsschiene (1) befestigt ist
die Kugeln (4) von dem Kugelkäfig (5) mit einer Vorspannung gegen die Laufflächen (9, 9') der Führungsschiene gehalten werden,
**dadurch gekennzeichnet, dass** an dem Kugelkäfig (5) in seiner Längserstreckung wenigstens abschnittsweise, vorzugsweise über seine gesamte Länge, wenigstens eine Torsionsnut (13) vorgesehen ist, welche auf der den Laufflächen (9, 9') der Führungsschiene (1) zugewandten Seite des Kugelkäfigs (5) angeordnet ist.

2. Linearführungssystem nach Anspruch 1, **dadurch gekennzeichnet, daß** an den Durchgangsöffnungen (7) des Kugelkäfigs (5) elastisch verformbare Haltemittel (15) vorgesehen sind, welche so ausgebildet sind, daß sie die Kugeln gegen ein Herausfallen aus den Durchgangsöffnungen (7) in Richtung der unter dem Kugelkäfig (5) angeordneten Lauffläche (9, 9') der Führungsschiene sichern, wenn die Kugeln (4) nicht an der Lauffläche (9, 9') anliegen.

3. Linearführungssystem nach einem der vorangegangenen Ansprüche, **dadurch gekennzeichnet, daß** die Seitenkanten (5', 5") in der Längserstreckung des streifenförmigen Kugelkäfigs (5) in zwei sich in der Längserstreckung der Führungsschiene (1) einander gegenüberliegende Nuten (6, 6') für die Befestigung des Kugelkäfigs (5) an der Führungsschiene eingreifen.

4. Linearführungssystem nach einem der vorangegangenen Ansprüche, **dadurch gekennzeichnet, daß** der streifenförmige Kugelkäfig (5) aus Kunststoff, hergestellt ist.

5. Linearführungssystem nach einem der vorangegangenen Ansprüche, **dadurch gekennzeichnet, daß** die Führungsschiene (1) auf zwei einander gegenüberliegenden Seiten jeweils genau eine Lauffläche (9, 9') und ein Kugellager aufweist.

6. Linearführungssystem nach einem der vorangegangenen Ansprüche, **dadurch gekennzeichnet, daß** der Schlitten (2) ein im Querschnitt im wesentlichen C-förmiges Profil (11) umfaßt, dessen jeweilige Endabschnitte (11', 11") Laufflächen (10, 10') aufweisen und die Führungsschiene (1) im Bereich der Kugellager umgreifen.

7. Linearführungssystem nach Anspruch 6, **dadurch gekennzeichnet, daß** der Schlitten (2) weiterhin eine Platte (12) umfaßt, die sich zwischen den Endabschnitten (11', 11") des im wesentlichen C-förmigen Profils (11) des Schlittens (2) erstreckt und mit den Endabschnitten (11', 11") unlösbar oder lösbar, vorzugsweise unlösbar, besonders bevorzugt mittels einer Schweißverbindung, verbunden ist.

8. Linearführungssystem nach einem der vorangegangenen Ansprüche, **dadurch gekennzeichnet, daß** der streifenförmige Kugelkäfig (5) auf der den Laufflächen (9, 9') der Führungsschiene (1) abgewandten Seite mehrere in der Nähe der Seitenkanten in der Längserstreckung des Kugelkäfigs (5) und in Reihe hintereinander angeordnete noppenförmige Erhebungen (14) aufweist.

## Claims

1. A linear guidance system comprising a guide rail (1) and a carriage (2) which is guided displaceably on the guide rail by way of at least two ball bearings (3, 3'), wherein the ball bearings respectively comprise a plurality of balls (4) and a strip-shaped ball cage (5) and the guide rail (1) has running surfaces (9, 9') and the carriage (2) has running surfaces (10, 10') for the rolling movement of the balls (4) of the ball bearings (3, 3'), wherein
the ball cage (5) has a plurality of substantially circular through openings (7) which are arranged in succession in a row and into which the balls (4) are inserted, wherein the inside diameter of the through openings tapers conically in the direction from a running surface (9, 9') of the guide rail to the associated running surface (10, 10') of the carriage (2) to an inside diameter or is constricted by limiting means to an inside diameter which is smaller than the diameter of the balls so that the balls are secured in the through openings (7) to prevent them from falling out of the through openings (7) in the direction of the running surface (10, 10') of the carriage,
the ball cage (5) is elastically deformable and is fixed to the guide rail (1),
the balls (4) are held by the ball cage (5) with a prestressing against the running surfaces (9, 9') of the guide rail,
**characterized in that** provided on the ball cage (5) in its longitudinal extent at least portion-wise and preferably over its entire length is at least one torsion groove (13) which is arranged on the side of the ball cage (5), that is towards the running surfaces (9, 9') of the guide rail (1).

2. A linear guidance system as set forth in claim 1 **characterised in that** provided at the through openings (7) of the ball cage (5) are elastically deformable holding means (15) which are of such a configuration that they secure the balls to prevent them from falling out of the through openings (7) in the direction of the running surface (9, 9') of the guide rail, arranged under the ball cage (5), when the balls (4) do not bear against the running surface (9, 9').

3. A linear guidance system as set forth in one of the preceding claims **characterised in that** the side edges (5', 5") in the longitudinal extent of the strip-shaped ball cage (5) engage into two grooves (6, 6') disposed in mutually opposite relationship in the longitudinal extent of the guide rail (1) for securing the ball cage (5) to the guide rail.

4. A linear guidance system as set forth in one of the preceding claims **characterised in that** the strip-shaped ball cage (5) is made from plastic material.

5. A linear guidance system as set forth in one of the preceding claims **characterised in that** the guide rail (1) on two mutually opposite sides has respectively precisely one running surface (9, 9') and one ball bearing.

6. A linear guidance system as set forth in one of the preceding claims **characterised in that** the carriage (2) includes a profile member (11) which is substantially C-shaped in crosssection and the respective end portions (11', 11 ") of which have running surfaces (10, 10') and embrace the guide rail (1) in the region of the ball bearings.

7. A linear guidance system as set forth in claim 6 **characterised in that** the carriage (2) further includes a plate (12) which extends between the end portions (11', 11") of the substantially C-shaped profile member (11) of the carriage (2) and is connected to the end portions (11', 11") non-releasably or releasably, preferably non-releasably, particularly preferably by means of a welded connection.

8. A linear guidance system as set forth in one of the preceding claims **characterised in that** the strip-shaped ball cage (5), on the side remote from the running surfaces (9, 9') of the guide rail (1), has a plurality of knob-shaped raised portions (14) arranged in succession in a row and in the proximity of the side edges in the longitudinal extent of the ball cage (5).

## Revendications

1. Système de guidage linéaire comprenant un rail de guidage (1) et un curseur (2) guidé en translation le long de ce rail par l'intermédiaire d'au moins deux roulements à billes (3, 3'), les roulements à billes comprenant chacun plusieurs billes (4) et une cage à billes (5) en forme de bande, le rail de guidage (1) présentant des surfaces de roulement (9, 9') et le curseur (2) présentant des surfaces de roulement (10, 10') pour le roulement des billes (4) des roulements à billes (3, 3'),
la cage à billes (5) présentant plusieurs ouvertures de passage sensiblement circulaires (7) disposées en une rangée l'une derrière l'autre et dans lesquelles les billes (4) sont emboîtées,
le diamètre intérieur des ouvertures de passage diminuant de façon conique, ou étant rétréci par des moyens de limitation, dans la direction allant d'une surface de roulement (9, 9') du rail de guidage vers la surface de roulement correspondante (10, 10') du curseur (2), pour atteindre un diamètre intérieur qui est plus petit que le diamètre des billes, de sorte que les billes sont retenues dans les ouvertures de passage (7) et empêchées de s'échapper des ouvertures de passage (7) en direction de la surface de roulement (10, 10') du curseur,
la cage à billes (5) étant de constitution élastiquement déformable et étant fixée au rail de guidage (1),
les billes (4) étant maintenues appuyées contre les surfaces de roulement (9, 9') du rail de guidage avec une précontrainte par la cage à billes (5),
**caractérisé en ce que**, sur la cage à billes (5), au moins par endroits dans son extension longitudinale et de préférence sur toute sa longueur, est prévue une rainure de torsion (13) qui est disposée sur le côté de la cage à billes (5) dirigé vers les surfaces de roulement (9, 9') du rail de guidage (1).

2. Système de guidage linéaire selon la revendication 1, **caractérisé en ce qu'**au niveau des ouvertures de passage (7) de la cage à billes (5), sont prévus des moyens de retenue élastiquement déformables (15) qui sont de constitution telle qu'ils empêchent les billes de tomber des ouvertures de passage (7) en direction de la surface de roulement (9, 9') du rail de guidage qui est disposée sous la cage à billes (5) lorsque les billes (4) ne sont pas en appui sur la surface de roulement (9, 9').

3. Système de guidage linéaire selon une des revendications précédentes, **caractérisé en ce que** les bords latéraux (5', 5"), dans l'extension longitudinale de la cage à billes (5) en forme de bande, sont engagés dans deux rainures mutuellement opposées (6, 6') dans l'extension longitudinale du rail de guidage (1) pour assurer la fixation de la cage à billes (5) au rail de guidage.

4. Système de guidage linéaire selon une des revendications précédentes, **caractérisé en ce que** la cage à billes en forme de bande (5) est fabriquée en matière plastique.

5. Système de guidage linéaire selon une des revendications précédentes, **caractérisé en ce que** le rail de guidage (1) présente exactement une surface de roulement (9, 9') et un roulement à billes sur chacun de deux côtés mutuellement opposés.

6. Système de guidage linéaire selon une des revendications précédentes, **caractérisé en ce que** le curseur (2) comprend un profilé (11) sensiblement en forme de C en coupe transversale dont les segments terminaux (11', 11 ") présentent des surfaces de roulement (10, 10') et encadrent le rail de guidage (1) dans la région des roulements à billes.

7. Système de guidage linéaire selon la revendication 6, **caractérisé en ce que** le curseur (2) comprend en outre une plaque (12) qui s'étend entre les segments terminaux (11', 11 ") du profilé sensiblement en forme de C (11) du curseur (2), et qui est assemblée aux segments terminaux (11', 11 ") de façon indémontable ou démontable, de préférence indémontable, et dans un mode particulièrement préféré, au moyen d'un assemblage soudé.

8. Système de guidage linéaire selon une des revendications précédentes, **caractérisé en ce que** la cage à billes (5) en forme de bande présente sur le côté éloigné des surfaces de roulement (9, 9') du rail de guidage (1), plusieurs saillies (14) en forme de bouton, disposées à proximité des bords latéraux dans l'extension longitudinale de la cage à billes (5) et en rangée l'une derrière l'autre.
